(19) Europäisches Patentamt
European Patent Office
Office européen des brevets

(11) **EP 1 051 582 B1**

(12) **EUROPÄISCHE PATENTSCHRIFT**

(45) Veröffentlichungstag und Bekanntmachung des Hinweises auf die Patenterteilung:
**20.08.2003 Patentblatt 2003/34**

(51) Int Cl.⁷: **F21V 5/02**, F21K 7/00, H01L 33/00, F21V 8/00

(21) Anmeldenummer: **99906162.5**

(22) Anmeldetag: **19.01.1999**

(86) Internationale Anmeldenummer:
**PCT/EP99/00310**

(87) Internationale Veröffentlichungsnummer:
**WO 99/040364 (12.08.1999 Gazette 1999/32)**

(54) **BELEUCHTUNGSANORDNUNG**

LIGHTING FIXTURE

SYSTEME D'ECLAIRAGE

(84) Benannte Vertragsstaaten:
**AT BE CH DE ES FI FR GB IT LI LU NL PT SE**

(30) Priorität: **05.02.1998 DE 19804569**
**15.06.1998 DE 19826548**

(43) Veröffentlichungstag der Anmeldung:
**15.11.2000 Patentblatt 2000/46**

(73) Patentinhaber: **Zumtobel Staff GmbH**
**6850 Dornbirn (AT)**

(72) Erfinder: **SEJKORA, Günther**
**A-6867 Schwarzenberg (AT)**

(74) Vertreter: **Schmidt-Evers, Jürgen, Dipl.-Ing. et al**
**Patentanwälte Mitscherlich & Partner,**
**Sonnenstrasse 33**
**80331 München (DE)**

(56) Entgegenhaltungen:
**EP-A- 0 354 468        EP-A- 0 756 132**
**US-A- 5 272 410**

**Beschreibung**

Die vorliegende Erfindung betrifft eine Beleuchtungsanordnung nach dem Oberbegriff des Anspruches 1, insbesondere eine Beleuchtungsanordnung, die in Leuchten, Bildschirmen usw. zum Einsatz kommen kann.

Beleuchtungsanordnungen der im Oberbegriff des Anspruches 1 beschriebenen Art werden beispielsweise zugleich als Leuchtenabdeckungen verwendet. Dabei ist bereits bekannt Abdeckungen mit auf der einer Lampe der Leuchte zugewandten Seite ausgebildeten und hervorstehenden Profilkörpern zur Lichtlenkung des Lichts der Leuchtenlampe einzusetzen, um den Abstrahlwinkel der Lichtstrahlen zur Verringerung der Blendung eines Betrachters zu begrenzen. In der GB-A-1365507 wird hierzu vorgeschlagen, die Profilkörper in Form von Pyramidenstümpfen auszubilden, welche von dem Grundkörper der Abdeckung hervorstehen, wobei die oberen Begrenzungsflächen der Pyramidenstümpfe mit einem lichtundurchlässigen Material beschichtet sind. In der US-A-3,351,753 wird ebenfalls eine Abdeckung mit in Form von Pyramidenstümpfen ausgebildeten Profilkörpern vorgeschlagen, wobei jedoch in diesem Fall die Seitenflächen der Pyramidenstümpfe sowie die Zwischenräume zwischen den Pyramidenstümpfen mit einem lichtundurchlässigen Material beschichtet sind.

Durch diese bekannten Abdeckungen wird zwar eine geeignete Lichtlenkung erreicht, um den Abstrahlwinkel der Lichtstrahlen zu begrenzen: Aufgrund der undurchsichtigen Bereiche der Abdeckung wird jedoch der Wirkungsgrad der Leuchte verringert. In der AT-A-301/87 wurde daher eine Abdeckung für Leuchten mit ebenfalls pyramidenartigen Profilkörpern vorgeschlagen, die auf der der Lampe der Leuchte zugewandten Seite des Grundkörpers der Abdeckung matrixartig abgeordnet sind und eine zu der Emissionsfläche der Abdeckung parallel verlaufende obere Begrenzungsfläche aufweisen, wobei die gesamte Abdeckung aus einem glasklaren Material besteht.

Die einzelnen Glas-Profilkörper dieser aus der AT-A-301/87 bekannten Abdeckung sind derart ausgestaltet, daß das von der Lampe der Leuchte auf die obere Begrenzungsfläche der einzelnen Profilkörper abgestrahlte Licht von den Profilkörpern zu der Emissionsfläche der Abdeckung weitergeleitet und dort innerhalb eines vorgegebenen maximalen Abstrahlwinkelbereichs abgestrahlt wird. Da jedoch diese Form von Abdeckungen bevorzugt in Verbindung mit länglichen Leuchtstofflampen verwendet wird, treten beim Einkoppeln des von der verwendeten Lampe emittierten Lichts in die Glas-Profilkörper der Abdeckung Probleme auf, da die Lampe naturgemäß nicht nur die oberen Begrenzungsflächen der einzelnen Profilkörper, sondern auch die (lichtdurchlässigen) Seitenflanken der pyramidenstumpfartig ausgebildeten Profilkörper mit Licht bestrahlt. Dies führt jedoch dazu, daß der gewünschte maximale Abstrahlwinkel zur Vermeidung der Blendung eines Betrachters nicht ohne weiteres eingehalten werden kann, da das von der Lampe abgestrahlte Licht nicht nur im Inneren der einzelnen Profilkörper zu der Emissionsfläche der Abdeckung hin geleitet, sondern auch an den Seitenflächen der Profilkörper reflektiert oder gebrochen wird.

Ferner ist aus der EP 0 345 468 A2 eine Beleuchtungsanordnung als flächenhafter Strahler bekannt, bei der auf einem lichtdurchlässigen Grundkörper mehrere Lumineszenz-Halbleiterkörper als Lichtmittel in einer flächenhaften Verteilung aufgebracht sind. Die Grundplatte dieser Beleuchtungsanordnung weist jedoch keine Profilkörper zur Lichtlenkung auf, wie sie beispielsweise aus der bereits oben genannten AT-A-301/87 bekannt sind.

Weiter ist in der US 5,272,410 eine Beleuchtungsanordnung gemäß dem Oberbegriff von Patentanspruch 1 offenbart. Die Beleuchtungsanordnung ist in diesem fall ein lichternittierender Körper, der beispielsweise als Rücklicht für Kraftfahrzeuge verwendbar ist. Er besteht aus zwei Glasplatten, von denen wenigstens eine eine Reihe von prismenartigen Ausnehmungen aufweist, deren Wände mit einer phosphoreszierenden Schicht belegt sind. Die Ausnehmungen enthalten ein unter Unterdruck stehendes Gas. An den Enden der Glasplatten sind Elektroden angeordnet, mittels derer durch Gasentladung in den Ausnehmungen an der phosphoreszierenden Schicht Licht erzeugt wird, welches in verschiedene Richtungen abgestrahlt wird. Die Außenseite einer der beiden Glasplatten ist mit einer reflektierenden Schicht versehen, so daß dieser Reflektor und die Prismenstruktur der Ausnehmungen dafür sorgen, daß das Licht so gelenkt wird, daß es auf der dem Reflektor abgewandten Seite des Körpers abgestrahlt wird. Bei dieser Beleuchtungsanordnung wird das Licht allerdings nicht unter einem begrenzten Abstrahlwinkel zur Verringerung der Blendung eines Betrachters abgestrahlt.

Der vorliegenden Erfindung liegt daher die Aufgabe zugrunde, eine Beleuchtungsanordnung mit in einem Grundkörper ausgebildeten Profilkörpern zu schaffen, bei der einerseits die zuvor beschriebene Lichteinkopplung in die einzelnen Profilkörper erleichtert und andererseits ein hoher optischer Wirkungsgrad, vorzugsweise mit ausreichender Entblendung, realisiert ist.

Diese Aufgabe wird gemäß der vorliegenden Erfindung durch eine Beleuchtungsanordnung mit den Merkmalen des Anspruches 1 gelöst. Die Unteransprüche beschreiben bevorzugte Ausführungsformen der vorliegenden Erfindung, die ihrerseits zu einer möglichst rationellen und serienmäßigen Herstellbarkeit der erfindungsgemäßen Beleuchtungsanordnung bzw. einem bestmöglichen optischen Wirkungsgrad mit bestmöglicher Entblendung beitragen.

Gemäß der vorliegenden Erfindung ist unmittelbar auf den Profilkörpern der erfindungsgemäßen Beleuchtungsanordnung, und zwar auf den oberen Begrenzungsflächen der Profilkörper, ein Lichtmittel angebracht, welches Licht in den entsprechenden Profilkörper abstrahlt. Die Profilkörper bestehen aus einem lichtdurchlässigen Material und leiten in ihrem Inneren das von den Lichtmitteln emittierte Licht zu der Emissionsfläche der Beleuchtungsanordnung hin, wo das Licht der Lichtmittel abgestrahlt wird. Dabei sind die einzelnen Profilkörper vorzugsweise derart ausgestaltet, daß die Beleuchtungsanordnung an jedem beliebigen Punkt ihre Emissionsfläche das Licht der Lichtmittel innerhalb eines vorgegebenen maximalen Abstrahlwinkelbereichs von beispielsweise 60°-70° abstrahlt, um eine Blendung eines Betrachters durch zu flach abgestrahltes Licht zu vermeiden.

Die einzelnen Profilkörper können beispielsweise pyramidenstumpfartig oder länglich in Form von Streifen ausgebildet sein. Als Lichtmittel kommt beispielsweise eine diffus leuchtende Schicht aus organischen oder anorganischen Halbleitermaterialien infrage, wobei in diesen Halbleitermaterialien durch Anlegen einer elektrischen Spannung eines Elektrolumineszenz angeregt wird.

Die Profilkörper der erfindungsgemäßen Beleuchtungsanordnung sind durch in dem Grundkörper der Abdeckung ausgebildete Vertiefungen voneinander getrennt, wobei diese Vertiefungen insbesondere V-förmig sein können. Die Flanken dieser Vertiefungen bzw. die Seitenflanken der Profilkörper können gerade oder gekrümmt sein. Vorteilhafterweise sind die Seitenflanken der Profilkörper an ihrer Innenseite verspiegelt, so daß das Licht innerhalb der Profilkörper vollständig reflektiert wird. Dieselbe Wirkung kann durch eine Auslegung der einzelnen Profilkörper derart erzielt werden, daß abhängig von dem Brechungsindex der Profilkörper das Licht auf die Innenseiten der Seitenflanken der Profilkörper ausschließlich unter einen total reflektierenden Winkel fällt.

Gemäß einem bevorzugten Ausführungsbeispiel sind die einzelnen Profilkörper in einer Folie ausgebildet, welche auf einem Träger einer Leuchte befestigt, insbesondere aufgeklebt wird.

Der Vorteil der vorliegenden Erfindung besteht darin, daß die auf die Profilkörper aufgebrachten Lichtmittel die Lichtquelle für die entsprechende Beleuchtungsanordnung darstellen. Sind die Lichtmittel in Form von Leuchtschichten ausgebildet, kann dementsprechend eine sehr flache Beleuchtungsanordnung realisiert werden. Da die Lichtmittel direkt auf die Profilkörper aufgebracht sind, tritt bei der erfindungsgemäßen Beleuchtungsanordnung in der Praxis das eingangs beschriebene Problem der Lichteinkopplung nicht auf. Da eine Leuchte mit der erfindungsgemäßen Beleuchtungsanordnung ohne Lampe und ohne Lampenfassungen auskommt, ist kein Lampenwechsel erforderlich. Eine derartige Leuchte weist abhängig von dem jeweils verwendeten Lichtmittel eine hohe Lebensdauer auf.

Die erfindungsgemäße Beleuchtungsanordnung kann insbesondere in Kombination mit einer oder mehreren flachen Leuchtstofflampen verwendet werden, die als Lichtmittel dienen und direkt auf den oberen Begrenzungsflächen der Profilkörper aufliegen. Auf diese Weise können die zuvor beschriebenen Vorteile der vorliegenden Erfindung mit den Vorteilen derartiger Leuchtstofflampen, wie z.B. flache Ausgestaltung und konstant hohe Leuchtdichte, kombiniert werden.

Die Erfindung wird nachfolgend anhand bevorzugter Ausführungsbeispiele näher beschrieben.

Fig. 1 zeigt schematisch eine perspektivische Ansicht einer Leuchte mit einer erfindungsgemäßen Beleuchtungsanordnung in Form einer Abdeckung,

Fig. 2a und 2b zeigen Querschnittsansichten der erfindungsgemäßen Beleuchtungsanordnung gemäß einem ersten bzw. zweiten Ausführungsbeispiel der vorliegenden Erfindung,

Fig. 3 zeigt eine perspektivische Ansicht eines bevorzugten Ausführungsbeispiels der erfindungsgemäßen Beleuchtungsanordnung, wobei in Fig. 3 zwei unterschiedliche Varianten dargestellt sind,

Fig. 4a und 4b zeigen vergrößerte Darstellungen eines Profilkörpers der in Fig. 2a bzw. 2b dargestellten Beleuchtungsanordnungen zur Erläuterung des Strahlenverlaufs innerhalb dieses Profilkörpers, und

Fig. 5a und 5b zeigen Querschnittsansichten der erfindungsgemäßen Beleuchtungsanordnung gemäß einem dritten und vierten Ausführungsbeispiel der vorliegenden Erfindung.

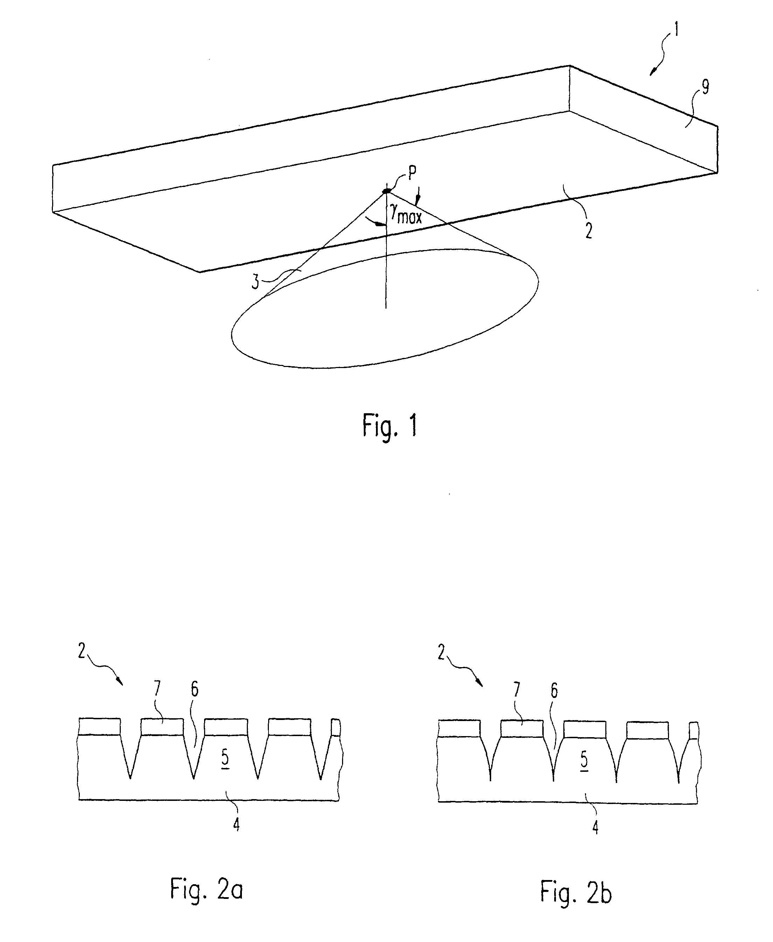

Fig. 1 zeigte eine perspektivische Ansicht einer länglich ausgebildeten Leuchte, bei der die erfindungsgemäße Beleuchtungsanordnung als Abdeckung verwendet wird. Wie aus Fig.1 ersichtlich ist, ist in der Leuchte 1 eine Beleuchtungsanordnung bzw. Abdeckung 2 derart in einem Gehäuse 9 gehalten, daß die Emissionsfläche der Abdeckung 2 nach unten gerichtet ist. Die Emissionsfläche der Abdeckung 2 ist vorzugsweise eben ausgebildet. Die Abdeckung 2 und die darin ausgebildeten (und in Fig. 1 nicht sichtbaren) Profilkörper sind derart ausgestaltet, daß von der Emissionsfläche der Abdeckung 2 an jedem beliebigen Punkt P Licht lediglich innerhalb eines bestimmten maximalen Abstrahlwinkels (Abblendwinkels) $\gamma_{max}$ abgestrahlt wird. Die austretenden Lichtstrahlen begrenzen dementsprechend einen Kegelmantel 3. Die in Fig. 1 bezüglich des Punktes P dargestellten Verhältnisse treffen analog für sämtliche andere Punkte der Emissionsfläche der Leuchtenabdeckung 2 zu.

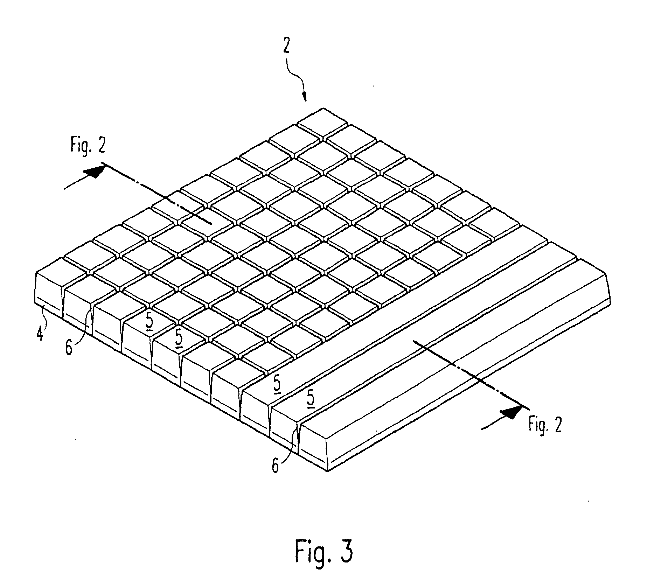

Fig. 3 zeigte eine perspektivische Draufsicht auf ein bevorzugtes Ausführungsbeispiel einer erfindungsgemäßen Beleuchtungsanordnung bzw. Abdeckung 2. Genauer gesagt zeigt Fig. 3 eine Draufsicht auf die dem Leuchtengehäuse zugewandte Oberfläche der Abdeckung 2. Die Abdeckung 2 besitzt eine Vielzahl von Profilkörpern 5, die auf bzw. in einem Grundkörper 4 der Abdeckung 2 ausgebildet sind. Die einzelnen Profilkörper 5 sind durch Vertiefungen 6 voneinander beabstandet. Wie in Fig. 3 gezeigt ist, können die Profilkörper 5 beispielsweise die Form von Pyramidenstümpfen oder länglichen Streifen aufweisen. Sind die Profilkörper 5 in Form von Pyramidenstümpfen ausgebildet, können die Profilkörper 5 gleichmäßig in Reihen und Zeilen, d.h. matrixartig, angeordnet sein, so daß die Vertiefungen 6 zwischen den einzelnen Pyramidenstümpfen 5 ein Gitter bilden. Sind die Profilkörper 5 streifenförmig ausgebildet, sind diese bevorzugt zueinander parallel angeordnet, so daß auch die dazwischen angeordneten Vertiefungen zueinander parallel verlaufen.

Fig. 2a und 2b zeigen beispielhafte Querschnittsansichten der erfindungsgemäßen Beleuchtungsanordnung entlang der in Fig. 3 dargestellten strichpunktierten Schnittlinie. Dabei sind in Fig. 2a und 2b die Seitenflanken der einzelnen Profilkörper unterschiedlich ausgebildet.

Den in Fig. 2a und 2b dargestellten Ausführungsbeispielen ist gemeinsam, daß die einzelnen Profilkörper 5 durch im wesentlichen V-förmig verlaufende Vertiefungen 6 getrennt sind. Die Seitenflanken der einzelnen Profilkörper 5 fallen relativ steil ab. An die Unterseite des Grundkörpers 4, die die Emissionsfläche der Abdeckung 2 darstellt, schließt sich ein im wesentlichen planparalleler Abschnitt an, der den Strahlenverlauf im wesentlichen nicht beeinflußt und dadurch gebildet ist, daß die einzelnen V-förmigen Einschnitte 6 nicht vollständig bis zu der Unterseite des Grundkörpers 4 durchgezogen werden können.

Die Profilkörper 5 sind vorzugsweise einstückig mit dem Grundkörper 4 aus einem lichtdurchlässigen Material gefertigt. Der gesamte Grundkörper 4 einschließlich der Profilkörper 5 kann beispielsweise aus Acrylglas bestehen. Vorteilhafterweise kann jedoch der Grundkörper 4 auch in Form einer lichtdurchlässigen Kunststoff-Folie ausgestaltet sein, in welcher die einzelnen Profilkörper 5 analog zu der bekannten Glas-Profilkörperausführungsform ausgebildet sind. Diese Kunststoff-Folie wird dann einfach an einem rechteckigen Träger der Leuchte befestigt, beispielsweise aufgeklebt. Durch die Verwendung des Kunststoffmaterials kann die Herstellung des Grundkörpers 4 sowie die Ausbildung der Profilkörper 5 in dem Grundkörper 4 erleichtert werden.

Gemäß der vorliegenden Erfindung ist nunmehr auf jedem Profilkörper 5 ein Lichtmittel 7 angebracht. Vorzugsweise wird das Lichtmittel 7 durch eine relativ dünne Leuchtschicht gebildet, die unmittelbar auf die obere Begrenzungsfläche eines jeden Profilkörpers 5 aufgetragen wird und eine Dicke < 1mm aufweisen kann. Jedes Lichtmittel 7 strahlt Licht unmittelbar in das Innere des entsprechenden Profilkörpers 5 ab. Die Profilkörper 5 sind vorzugsweise derart ausgestaltet, daß das Licht an der Innenseite ihrer Seitenflanken vollständig reflektiert und zu der Unterseite des Grundkörpers 4, d.h. zu der Emissionsfläche der Abdeckung 2 hin geleitet wird. Des weiteren erfüllen die einzelnen Profilkörper 5 geometrische Rahmenbedingungen, um den in Fig. 1 gezeigten maximalen Abstrahlwinkel $\gamma_{max}$ einhalten zu können. Die Leuchtschicht 7 kann beispielsweise aus einem anorganischen oder organischen Halbleitermaterial bestehen und durch Siebdruck auf die einzelnen Profilkörper 5 aufgebracht werden.

Wie in Fig. 2a gezeigt ist, können die Seitenflanken der Profilkörper 5 bzw. der V-förmigen Vertiefungen 6 gerade verlaufen. Statt dessen ist jedoch auch der in Fig. 2b gezeigte gebogen bzw. gekrümmte Verlauf dieser Seitenflanken möglich.

Wie bereits erwähnt worden ist, können als Lichtmittel 7 für die in Fig. 2a und 2b dargestellten Profilkörper 5 beispielsweise organische oder anorganische Halbleitermaterialien verwendet werden. Abhängig von dem jeweils verwendeten Material werden diese Materialien durch Anlegen einer Gleich- oder Wechselspannung zum Leuchten angeregt (Elektrolumineszenz). Entsprechende elektrolumineszente Folien oder Platten sind bereits bekannt.

So kann das Lichtmittel 7 beispielsweise durch eine Elektrolumineszenz-Leuchtschicht mit in einem Dielektrikum angeordneten Leuchtkristallen gebildet sein, wobei an die Leuchtschicht über ITO-Elektroden (Indium-Zinn-Oxid) eine elektrische Spannung zum Anregen der Elektrolumineszenz angelegt wird. Derartige Elektrolumineszenz-Leuchtschichten können eine Dicke < 1mm aufweisen. Des weiteren kann als Leuchtschicht ein Polymerfilm verwendet werden, an den ebenfalls über ITO-Elektroden eine elektrische Spannung angelegt wird. Beim Anlegen der elektrischen Spannung werden positive Ladungsträger (Löcher) und negative Ladungsträger (Elektronen) injiziert, wobei diese unterschiedlichen Ladungsträger unter Aussenden von Lichtstrahlen rekombinieren. Der Polymerfilm kann beispielsweise aus PPV bestehen und eine Dicke < 1μm aufweisen. Als Leuchtschicht kann auch eine Anordnung von übereinander angeordneten lichtemittierenden Schichten verwendet werden, die jeweils Licht unterschiedlicher Wellenlängen abstrahlen, so daß von der Leuchtschicht insgesamt Weißlicht abgegeben wird. Allgemein werden gemäß der vorliegenden Erfindung vorzugsweise Lichtmittel eingesetzt, welche diffuses Licht emittieren.

Wie bereits zuvor erläutert worden ist, müssen die einzelnen Profilkörper bestimmte geometrische Rahmenbedingungen einhalten, damit - wie in Fig. 1 gezeigt ist - von der Emissionsfläche der Beleuchtungsanordnung bzw. Abdeckung 2 Lichtstrahlen zur Vermeidung einer Blendung eines Betrachters ausschließlich im Bereich 0° < $\gamma_{max}$ abgestrahlt werden. Diese geometrischen Rahmenbedingungen sind insbesondere von dem Brechungsindex des in Fig. 2 gezeigten Lichtmittels 2, dem Brechungsindex des Materials der Profilkörper 5 sowie dem gewählten maximalen Abstrahlwinkel (Abblendwinkel) $\gamma_{max}$ abhängig. Bevorzugt wird als maximaler Abstrahlwinkel $\gamma_{max}$ ein Winkel von 60° gewählt. Allgemein sind jedoch maximale Abstrahlwinkel $\gamma_{max}$ im Bereich 60°-70° ausreichend.

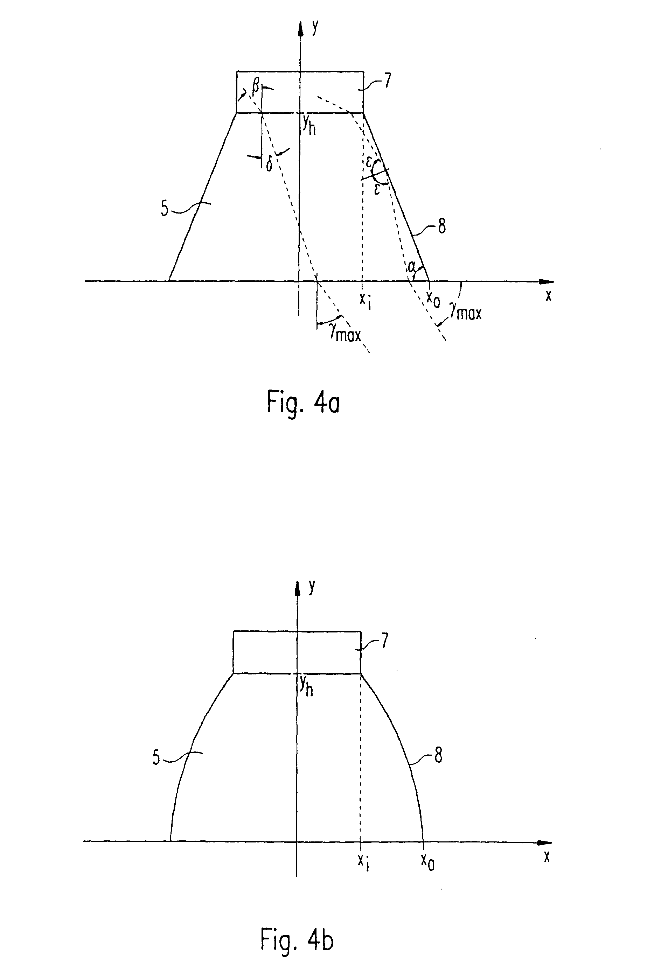

Die geometrischen Rahmenbedingungen für die jeweils verwendeten Profilkörper sollen nachfolgend anhand Fig. 4a und 4b näher erläutert werden. Die Fig. 4a und 4b zeigen 2D-Projektionen der in den Fig. 2a bzw. 2b dargestellten Profilkörper 5 mit darauf aufgebrachten Leuchtschichten 7.

Wie in Fig. 4a gezeigt ist, werden von der Leuchtschicht 7 Lichtstrahlen in das Innere des entsprechenden Profilkörpers 5 emittiert. Diese Strahlen können den Profilkörper 5 ohne Reflexion an den Seitenflanken 8 des Profilkörpers 5 verlassen, was in Fig. 4a durch den linken Strahlverlauf angedeutet ist. Ebenso ist jedoch auch möglich, daß bestimmte von der Leuchtschicht 7 emittierte Lichtstrahlen an einer Seitenflanke 8 des Profilkörpers 5 reflektiert und erst danach an der Unterseite des Profilkörpers 5 abgestrahlt werden, was in Fig. 4a durch den rechten Strahlverlauf angedeutet ist. In jedem Fall werden die von der Leuchtschicht 7 emittierten Lichtstrahlen zwei Mal gebrochen, nämlich einmal an der Grenzfläche zwischen der Leuchtschicht 7 und dem Profilkörper 5 und ein zweites Mal an der Unterseite des Profilkörpers 5, wenn die Lichtstrahlen den Profilkörper 5 wieder verlassen und emittiert werden. Im folgenden sei davon ausgegangen, daß $n_L$ den Brechungsindex der Leuchtschicht 7 und $n_S$ den Brechungsindex des Strukturblocks bzw. Profilkörpers 5 bezeichnet.

Die Lichtlenkung innerhalb des Profilkörpers 5 bzw. die Lichtemission von dem Profilkörper 5 soll im wesentlichen zwei Bedingungen erfüllen. Zum einen soll kein von der Leuchtschicht 7 in dem Profilkörper 5 emittierter Lichtstrahl seitlich aus dem Profilkörper 5 herausgebrochen werden, d.h. die Lichtstrahlen der Leuchtschicht 7 sollen entweder ohne Reflexion an den Seitenflanken 8 des Profilkörpers 5 an der Unterseite des Profilkörpers 5 heraustreten oder aber an den Seitenflanken 8 des Profilkörpers 5 total reflektiert werden. Des weiteren soll kein Lichtstrahl die untere Fläche des Profilkörpers 5 mit einem Winkel verlassen, der größer als ein gewünschter maximaler Abstrahl- bzw. Abblendwinkel $\gamma_{max}$ ist. Vorteilhafterweise beträgt dieser maximale Abstrahlwinkel $\gamma_{max}$ 60°, um beispielsweise bei Verwendung der Beleuchtungsanordnung zur Raumbeleuchtung eine optimale Entblendung zu erzielen.

Wie bereits zuvor erläutert worden ist, werden die von der Leuchtschicht 7 emittierten Lichtstrahlen beim Übergang in den Profilkörper 5 abhängig von dem Brechungsindex $n_L$ der Leuchtschicht 7 sowie dem Brechungsindex $n_S$ des Strukturblocks bzw. Profilkörpers 5 gebrochen. Dabei besteht gemäß dem Brechungsgesetz zwischen dem Einfallswinkel $\beta$ und dem Ausfallswinkel $\delta$ folgender Zusammenhang:

$$\frac{\sin \beta}{\sin \delta} = \frac{n_S}{n_L} \tag{1}$$

Allgemein werden Lichtstrahlen beim Übergang in ein optisch dichteres Medium zum Lot hin gebrochen, während die Lichtstrahlen beim Übergang in ein optisch dünneres Medium vom Lot weg gebrochen werden. Dies bedeutet im vorliegenden Fall, daß die von der Leuchtschicht 7 emittierten Lichtstrahlen für $n_S > n_L$ in den Strukturblock bzw. Profilkörper 5 hinein, d.h. zu dem Lot hin gebrochen werden, während die Lichtstrahlen für $n_S < n_L$ vom Lot weg gebrochen werden.

Gilt $n_S < n_L$, erfolgt ab einem bestimmten maximalen Einfallswinkel $\beta_{max}$ eine Totalreflexion des von der Leuchtschicht 7 emittierten Lichtstrahls an der Grenzfläche zu dem Profilkörper 5, wobei gilt :

$$\sin \beta_{max} = \frac{n_S}{n_L} \tag{2}$$

Dies bedeutet, daß in diesem Fall auf die Grenzschicht zu dem Profilkörper 5 auftreffende Strahlen, welche zu dem Lot einen Einfallswinkel zwischen $\beta_{max}$ und 90° einschließen, total reflektiert werden.

Demzufolge kann der Winkel $\delta$ gemäß der Formel (1) den folgenden maximalen Wert annehmen:

$$\delta_{max} = \arcsin \frac{n_L}{n_S} \tag{3}$$

Selbstverständlich gelten die obigen Überlegungen auch für die Brechung der Lichtstrahlen an der Unterseite des Profilkörpers 5, wobei jedoch in diesem Fall zu berücksichtigen ist, daß für den Brechungsindex n der Luft gilt n = 1.

Wie bereits zuvor erläutert worden ist, sollen auf die Innenflächen der Seitenflanken 8 des Profilkörpers 5 auftreffenden Lichtstrahlen total reflektiert werden. Dies kann beispielsweise durch eine (lichtundurchlässige) Verspiegelung der Innenflächen der Seitenflanken 8 erzielt werden, so daß keine Lichtstrahlen seitlich aus dem Profilkörper 8 herausgebrochen werden können. Statt dessen kann jedoch auch eine Totalreflexion analog zu der oben angegebenen Formel (2) dadurch erzielt werden, wenn gewährleistet ist, daß die Lichtstrahlen auf die Seitenflächen 8 unter einem Winkel $\varepsilon$ auftreffen, bei dem nach dem Reflexionsgesetz die Lichtstrahlen vollständig in den optisch dichteren Profilkörper 5 reflektiert werden, d.h. die Lichtstrahlen müssen mit einem Winkel $\varepsilon > \varepsilon_{min}$ auftreffen, wobei gilt:

$$\sin \varepsilon_{min} = \frac{1}{n_S} \text{ bzw. } \varepsilon_{min} = \arcsin \frac{1}{n_S} \qquad (4)$$

Abhängig von den zuvor erläuterten Voraussetzungen können nunmehr die geometrischen Abmessungen des in Fig. 4a bzw. 4b dargestellten Profilkörpers 5 berechnet werden, wobei diese Abmessungen insbesondere abhängig von den vorgegebenen Brechungsindizes $n_L$ und $n_S$ sowie dem gewünschten maximalen Ausblendwinkel $\beta_{max}$ sind. Dabei wird gemäß Fig. 4a und 4b davon ausgegangen, daß das Strukturelement bzw. der Profilkörper 5 symmetrisch zu der y-Achse angeordnet ist und die Unterseite des Profilkörpers 5 die x-Achse bildet. Des weiteren sei der Profilkörper 5 derart ausgestaltet, daß die Seitenflanken 8 von oben nach unten nach außen geneigt verlaufen. Im folgenden bezeichnet $y_h$ die Höhe des Profilkörpers 5, $2x_i$ die Breite der oberen Begrenzungsfläche und $2x_a$ die Breite der unteren Begrenzungsfläche des Profilkörpers 5.

Bezüglich der in Fig. 4a gezeigten Profilkörperform interessiert neben den Werten für $x_i$, $x_a$ und $y_h$ insbesondere auch der Neigungswinkel $\alpha$ der Seitenflanken 8 des Profilkörpers 5. Aufgrund der gewünschten Totalreflexion an den Seitenflanken 8 des Profilkörpers 5 ergibt sich durch Auswertung der oben angegebenen bekannten Zusammenhänge folgende Bedingung für den Neigungswinkel $\alpha$:

$$\alpha < 90° - \arcsin \frac{1}{n_S} + 90° - \arcsin \frac{n_L}{n_S} \qquad (5)$$

Da die in dem Profilkörper 5 nicht von den Seitenflanken 8 reflektierte Lichtstrahlen an der Unterseite maximal mit dem vorgegebenen Winkel $\gamma_{max}$ austreten sollen, ergeben sich zudem die folgenden Zusammenhänge:

$$\alpha < \frac{1}{2} \left( 90° + \arcsin \left(\frac{1}{n_S} * \sin\gamma_{max} \right) + 90° - \arcsin \frac{n_L}{n_S}\right) \qquad (6)$$

$$\alpha > 90° - \frac{1}{2} \arcsin \left(\frac{1}{n_S} * \sin\gamma_{max} \right) \qquad (7)$$

Aus den Formeln (5) - (7) kann ein geeigneter Neigungswinkel $\alpha$ bestimmt und ein gewünschter Wert $x_i$ vorgegeben werden. Davon abhängig kann schließlich die Höhe $y_h$ des Profilkörpers 5 gemäß folgender Gleichung bestimmt werden:

$$y_h = 2 * \cot \left(\arcsin \left(\frac{1}{n_S} * \sin\gamma_{max}\right)\right) * x_i / \left(1 - \cot \left(\arcsin \left(\frac{1}{n_S} * \sin\gamma_{max} \right)\right) / \tan\alpha \right) \qquad (8)$$

Dieselbe Vorgehensweise ist im Prinzip für den in Fig. 4b gezeigten Profilkörperverlauf möglich. Dabei wird jedoch aufgrund des gekrümmten Verlaufs der Seitenflanken 8 des Profilkörpers 5 davon ausgegangen, daß die Seitenflanken 8 gemäß einer vorgegebenen Funktion f(x) verlaufen, d.h. es gilt:

$$y = f(x) \text{ für alle } |x| > x_i \qquad (9)$$

Dabei wird im folgenden davon ausgegangen, daß geeignete Werte für $x_i$ und $y_h$ neben dem Verlauf f(x) vorgegeben sind und davon abhängig lediglich der Wert $x_a$ zu bestimmen ist.

Aus dem Erfordernis betreffend die Totalreflexion an den Seitenflanken 8 des Profilkörpers 5 ergibt sich folgende Bedingung:

$$|\arctan f'(x)| < 90° - \arcsin \frac{1}{n_S} + \arctan \left(\left|\frac{y_h - f(x)}{x_i + x}\right|\right) \text{ für alle } x \in [x_i; x_a] \qquad (10)$$

Für die Entblendungsbedingung der an den Seitenflanken 8 des Profilkörpers 5 reflektierten Lichtstrahlen ergeben sich folgende Bedingungen:

$$|arctan\ f'(x)| < \frac{1}{2}\ (90° + arctan\ (|\ \frac{y_h - f(x)}{x_i + x}\ |) + arcsin\ (\frac{1}{n_S} * sin\gamma_{max}\ )))\ \ \ \ \ \ (11)$$

für alle $x \in [x_i; x_a]$

$$|arctan\ f'(x)| > \frac{1}{2}\ (90° + arctan\ (|\ \frac{y_h - f(x)}{x_i + x}\ |) - arcsin\ (\frac{1}{n_S} * sin\gamma_{max}\ ))\ \ \ \ \ \ (12)$$

für alle $x \in [x_i; x_a]$

Schließlich ergibt sich für die Entblendungsbedingung bezüglich der den Profilkörper 5 ohne Reflexion an den Seitenflanken 8 durchlaufenden Lichtstrahlen die folgende Bedingung:

$$y_h > tan\ (\ 90° - arcsin\ (\frac{1}{n_S} * sin\gamma_{max}\ )) * (x_a + x_i)\ \ \ \ \ \ (13)$$

Abhängig von den vorgegebenen Werten für $x_i$ und $y_h$ ist nunmehr die ebenfalls vorgegebene Funktion $f(x)$ für alle $x$ mit $|x| > x_i$ unter Beachtung der oben angegebenen Bedingungen (10)-(12) zu entwickeln, bis ein Wert für $x_a$ gefunden wird, der die Bedingung gemäß Formel (13) zu erfüllt.

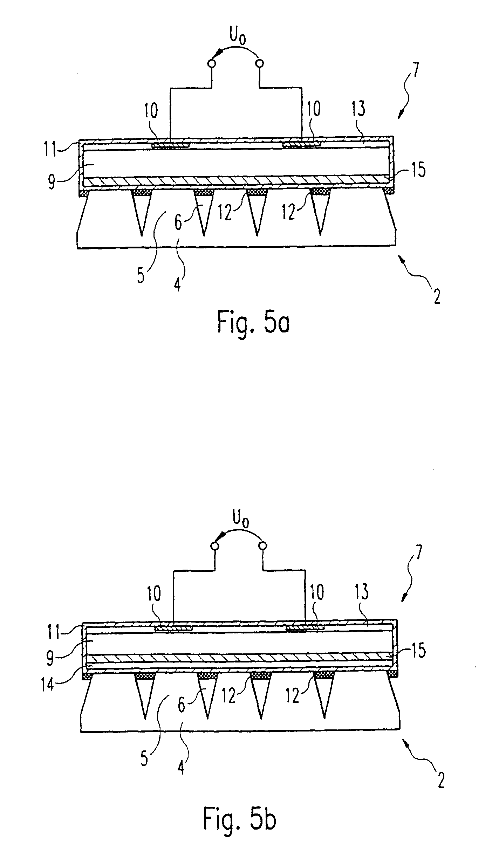

Fig. 5a und Fig. 5b zeigen weitere Ausführungsbeispiele der vorliegenden Erfindung, wobei als Lichtquelle bzw. Lichtmittel 7 eine flache Leuchtstofflampe verwendet wird.

Flache Leuchtstofflampen sind neueste Entwicklungen auf dem Gebiet der Flächenstrahler. Unter Bezugnahme auf Fig. 5a umfassen derartige flache Leuchtstofflampen einen Körper 11 aus einem lichtdurchlässigen oder transparenten Material, insbesondere einen Glaskörper, dessen Innenraum 9 mit einem bestimmten Gas, z.B. Xenon, gefüllt ist. Über in dem Glaskörper 2 angeordnete Eletroden 10 wird eine geeignete Spannung $U_0$ angelegt, die die Gasmoleküle im Innenraum 9 des Glaskörpers 2 anregt. Beim Zerfall dieser angeregten Gasmoleküle entsteht eine kurzwellige UV-Strahlung, die mit Hilfe eines entsprechenden Leuchtstoffes 15, mit dem die Emissionsfläche des Glaskörpers 2 beschichtet ist, in sichtbares Licht umgewandelt und abgestrahlt wird. Die Effizienz der Strahlungserzeugung kann zudem dadurch verbessert werden, daß zwischen dem Entladungs- oder Innenraum 9 des Glaskörpers 2 und mindestens einer der Elektroden 10 eine Isolierung 13 angeordnet und/oder eine gezielt gewählte gepulste Spannung $U_0$ angelegt wird.

Derartige Leuchtstofflampen können aufgrund ihrer flachen Ausgestaltung und ihrer gleichmäßigen und hohen Leuchdichte in verschiedenen Anwendungsbereichen zum Einsatz kommen, insbesondere als Hintergrundbeleuchtung für (LCD-) Bildschirme.

Gemäß einem Ausführungsbeispiel der vorliegenden Erfindung ist vorgesehen, mindestens eine derartige flache Leuchtstofflampe als Lichtmittel 7 für die Profilkörper 5 der Beleuchtungsanordnung 2 zu verwenden. Insbesondere kann jeweils eine entsprechend klein ausgebildete flache Leuchtstofflampe 7 auf die obere Begrenzungsfläche eines Profilkörpers 5 aufgebracht werden. Der Übersichtlichkeit halber sind jedoch in Fig. 5a und Fig. 5b Ausführungsbeispiele dargestellt, wobei eine derartige flache Leuchtstofflampe als gemeinsames Lichtmittel 7 für mehrere Profilkörper 5 dient und unmittelbar auf den oberen Begrenzungsflächen der entsprechenden Profilkörper 5 angeordnet ist.

Wie in Fig. 5a gezeigt ist, ist somit die erfindungsgemäße Glasblockrasterstruktur (vgl. Fig. 3) mit einem Grundkörper 4 aus einem lichtdurchlässigen Material und mehreren in dem Grundkörper 4 ausgebildeten (beispielsweise pyramidenartigen) Profilkörpern 4, die durch Vertiefungen 6 voneinander beabstandet sind, direkt hinter der Emissions- oder Lichtaustrittsfläche der flachen Leuchtstofflampe 7 angeordnet. Um die bereits zuvor erläuterte Problematik des seitlich auf die Seitenflanken der Profilkörper 5 auftreffenden Lichts zu lösen, ist gemäß dem in Fig. 5a gezeigten Ausführungsbeispiel vorgesehen, die in dem Glaskörper 11 der flachen Leuchtstofflampe 7 angebrachte Leuchtstoffschicht 15 entsprechend den Vertiefungen 6 zwischen den Profilkörpern derart zu unterbrechen, daß das von der Leuchtstofflampe emittierte Licht von der Leuchtstoffschicht 15 nur an denjenigen Bereichen in sichtbares Licht umgewandelt und abgestrahlt wird, wo die oberen Begrenzungsflächen der Profilkörper 5 an der Emissionsfläche der Leuchtstofflampe 7 anliegen. Dies kann beispielsweise dadurch realisiert werden, daß eine gitternetzartige, lichtundurchlässige Schicht 12 auf der Emissionsfläche des Glaskörpers 11 befestigt, insbesondere aufgeklebt oder aufgedruckt, wird, so daß die oberen Begrenzungsflächen der Profilkörper 5 die Zwischenräume des Gitternetzes aus dem zuvor erwähnten lichtundurchlässigen Material 12 überdecken und direkt an der Emissionsfläche des Glaskörpers 11 anliegen. Auf diese Weise ist sichergestellt, daß das von der Leuchtstoffschicht abgestrahlte sichtbare Licht

ausschließlich in die oberen Begrenzungsflächen der Profilkörper 5 eintreten kann.

Der Wirkungsgrad der Beleuchtungsanordnung 2 kann weiterhin dadurch verbessert werden, daß die gesamte Lichtaustrittsfläche der flachen Leuchtstofflampe 7 mit einem dem Fachmann bekannten Material beschichtet wird, welches UV-Licht reflektiert. Eine entsprechende Beleuchtungsanordnung ist in Fig. 5b dargestellt, wobei diese das UV-Licht reflektierende Schicht 14 insbesondere zwischen der Leuchtstoffschicht 15 und der Lichtaustritts- oder Emissionsfläche der flachen Leuchtstofflampe 7 angeordnet ist. Ansonsten entspricht der Aufbau der in Fig. 5b gezeigten Beleuchtungsanordnung dem der in Fig. 5a dargestellten Beleuchtungsanordnung.

Die in Fig. 5a und Fig. 5b gezeigten Ausführungsformen können auch derart abgewandelt werden, daß der Glaskörper 11 der flachen Leuchtstofflampe 7 im Bereich des Lichtaustritts derart ausgebildet ist, daß er selbst die Struktur des Glasblockrasters besitzt, d.h. die Profilkörper 5 (und der Grundkörper 4) sind in diesem Fall einteilig mit dem Glaskörper 2 der flachen Leuchtstofflampe 7 ausgebildet.

Auch die Profilkörper 4 der in Fig. 5a und 5b gezeigten Ausführungsbeispiele weisen vorteilhafterweise die bereits zuvor erläuterten Eigenschaften hinsichtlich einer möglichst effektiven Lichtlenkung und Entblendung auf.

Ergänzend zu den obigen Ausführungen ist zu bemerken, daß die erfindungsgemäße Beleuchtungsanordnung beispielsweise zur Hintergrundbeleuchtung von Bildschirmen in Frage kommt, wobei der Wirkungsgrad und die Entblendung insbesondere dadurch verbessert werden können, daß jedem Bildpunkt bzw. Pixel des Bildschirm ein Profilkörper 4 zugeordnet ist.

Des weiteren können die Profilkörper 5 beispielsweise auch derart ausgestaltet sein, daß ihr "Entblendungswinkel" $\gamma_{max}$ 90° beträgt, wobei in diesem Fall sichergestellt werden kann, daß die gesamte Strahlung aus der das entsprechende Lichtmittel 7 umgebenden Hülle austreten kann, um den Wirkungsgrad zu steigern. Dies trifft insbesondere auf Lichtmittel 7 in Form von Elektrolumineszenzlampen zu, deren Substrat auf Glasplatten als Trägermaterial aufgebracht ist, da bei derartigen Elektrolumineszenzlampen bis zu 50% der erzeugten Lichtstrahlung üblicherweise so flach in die Glasplatten eintritt, daß es aufgrund von Totalreflexion nicht mehr austreten kann.

Schießlich kann die erfindungsgemäße Beleuchtungsanordnung beispielsweise auch in Singalanlagen bzw. deren Signallichtern, wie z.B. Ampeln oder Bremsleuchten, zum Einsatz kommen, wobei in diesem Fall die Profilkörper 5 zum Schutz von Verkehrsteilnehmern usw. derart ausgestaltet sein sollten, daß ihr Entblendungswinkel $\gamma_{max}$ 30° beträgt.

## Patentansprüche

1. Beleuchtungsanordnung (2), mit
   wenigstens einem Lichtmittel (7) zum Abstrahlen von Licht,
   einem Grundkörper (4) aus einem lichtdurchlässigen Material, und
   in dem Grundkörper (4) ausgebildeten Profilkörpern (5) aus einem lichtdurchlässigen Material, welche durch Vertiefungen (6) voneinander beabstandet sind und das von den Lichtmitteln (7) abgestrahlte Licht zu einer Emissionsfläche des Grundkörpers (4) leiten und dort abstrahlen,
   **dadurch gekennzeichnet,**
   **daß** die Lichtmittel (7) auf den oberen Begrenzungsflächen der Profilkörper (5) angebracht sind und das Licht durch die oberen Begrenzungsflächen der Profilkörper (5) in die entsprechenden Profilkörper (5) abstrahlen.

2. Beleuchtungsanordnung nach Anspruch 1,
   **dadurch gekennzeichnet,**
   **daß** die Lichtmittel (7) diffuses Licht in die Profilkörper (5) abstrahlen.

3. Beleuchtungsanordnung nach Anspruch 1 oder 2,
   **dadurch gekennzeichnet,**
   **daß** auf der oberen Begrenzungsfläche eines jeden Profilkörpers (5) ein Lichtmittel (7) angebracht ist.

4. Beleuchtungsmittel nach Anspruch 3,
   **dadurch gekennzeichnet,**
   **daß** die Lichtmittel (7) in Form einer Leuchtschicht auf den oberen Begrenzungsflächen der Profilkörper (5) aufgebracht sind.

5. Beleuchtungsanordnung nach Anspruch 4,
   **dadurch gekennzeichnet,**
   **daß** jede Leuchtschicht (7) eine Dicke < 1mm aufweist.

6. Beleuchtungsanordnung nach einem der vorhergehenden Ansprüche,
   **dadurch gekennzeichnet,**
   **daß** die Lichtmittel (7) derart ausgestaltet sind, daß sie bei Anlegen einer elektrischen Spannung Licht emittieren.

7. Beleuchtungsanordnung nach Anspruch 6,
   **dadurch gekennzeichnet,**
   **daß** die Lichtmittel (7) ein organisches oder anorganisches Halbleitermaterial als lichtermittierendes Material aufweisen.

8. Beleuchtungsanordnung nach Anspruch 7,
   **dadurch gekennzeichnet,**
   **daß** die Lichtmittel (7) ein Polymermaterial als lichtemittierendes Material aufweisen.

9. Beleuchtungsanordnung nach Anspruch 1 oder 2,
   **dadurch gekennzeichnet,**
   **daß** die Lichtmittel (7) mindestens eine flache Leuchtstofflampe umfassen, die auf der oberen Begrenzungsfläche der Profilkörper (5) angeordnet ist.

10. Beleuchtungsanordnung nach Anspruch 9,
    **dadurch gekennzeichnet,**
    **daß** auf jedem Profilkörper (5) eine flache Leuchtstofflampe als Lichtmittel (7) angeordnet ist.

11. Beleuchtungsanordnung nach Anspruch 9 oder 10,
    **dadurch gekennzeichnet,**
    **daß** die flache Leuchtstofflampe (7) einen Körper (11) mit einer Lichtemissionsfläche aufweist, der einen mit bestimmten Gasmolekülen gefüllten Innenraum (9) umfaßt, in dem durch Anlegen einer elektrischen Spannung die Gasmoleküle angeregt werden können und bei ihrem Zerfall eine UV-Strahlung freisetzen, und
    **daß** die flache Leuchtstofflampe (7) eine benachbart zu der Lichtemissionsfläche angeordnete Leuchstoffschicht (15) aufweist, welche die bei einem Zerfall der Gasmoleküle freigesetzte UV-Strahlung in sichtbares Licht umwandelt, so daß das sichtbare Licht durch die Lichtemissionsfläche in den bzw. die entsprechenden Profilkörper (5) abgestrahlt wird.

12. Beleuchtungsanordnung nach Anspruch 9 oder 11,
    **dadurch gekennzeichnet,**
    **daß** die flache Leuchtstofflampe als gemeinsames Lichtmittel (7) auf der oberen Begrenzungsfläche mehrerer Profilkörper (5) angebracht ist, und
    **daß** Lichtbegrenzungsmittel (12) vorgesehen sind, um die Abstrahlung des sichtbaren Lichts von der Leuchtstoffschicht (15) ausschließlich in die entsprechenden Profilkörper (5) sicherzustellen.

13. Beleuchtungsanordnung nach Anspruch 12,
    **dadurch gekennzeichnet,**
    **daß** die Lichtbegrenzungsmittel eine an der Lichtemissionsfläche der flachen Leuchtstofflampe (7) angeordnete lichtundurchlässige Schicht (12) mit Lichtaustrittsöffnungen umfassen, wobei die Lichtaustrittsöffnungen derart angeordnet sind, daß jede Lichtaustrittsöffnung von einem entsprechenden Profilkörper bedeckt wird.

14. Beleuchtungsanordnung nach einem der Ansprüche 11-13,
    **dadurch gekennzeichnet,**
    **daß** die Lichtemissionsfläche der flachen Leuchtstofflampe (7) die Profilkörper (5) aufweist, wobei die Profilkörper (5) einteilig mit der Lichtemissionsfläche ausgebildet sind.

15. Beleuchtungsanordnung nach einem der Ansprüche 11-14,
    **dadurch gekennzeichnet,**
    **daß** zwischen der Leuchtstoffschicht (15) und der Lichtemissionsfläche der flachen Leuchtstofflampe (7) eine UV-Licht reflektierende Schicht (14) angeordnet ist.

16. Beleuchtungsanordnung nach einem der vorhergehenden Ansprüche,
    **dadurch gekennzeichnet,**
    **daß** die Profilkörper (5) länglich in Form von Streifen und zueinander parallel ausgebildet sind.

**17.** Beleuchtungsanordnung nach einem der Ansprüche 1- 15,
**dadurch gekennzeichnet,**
**daß** die Profilkörper (5) in Form eines Pyramidenstumpfes ausgebildet und derart angeordnet sind, daß sie durch ginerartig verlaufende Vertiefungen (6) voneinander beabstandet sind.

**18.** Beleuchtungsanordnung nach einem der vorhergehenden Ansprüche,
**dadurch gekennzeichnet,**
**daß** die Vertiefungen (6) zwischen den Profilkörpern (5) im wesentlichen V-förmig sind.

**19.** Beleuchtungsanordnung nach einem der vorhergehenden Ansprüche,
**dadurch gekennzeichnet,**
**daß** die Profilkörper (5) seitliche Flanken (8) aufweisen, welche von dem jeweiligen Lichtmittel (7) zu den Grundkörper (4) hin nach außen geneigt verlaufen.

**20.** Beleuchtungsanordnung nach Anspruch 19,
**dadurch gekennzeichnet,**
**daß** die seitlichen Flanken (8) gerade oder gekrümmt verlaufen.

**21.** Beleuchtungsanordnung nach Anspruch 19 oder 20,
**dadurch gekennzeichnet,**
**daß** jeder Profilkörper (5) derart ausgestaltet ist, daß das in sein Inneres abgestrahlte Licht des entsprechenden Lichtmittels (7) vollständig innerhalb des Profilkörpers (5) an den seitlichen Flanken (8) reflektiert wird.

**22.** Beleuchtungsanordnung nach Anspruch 21,
**dadurch gekennzeichnet,**
**daß** die seitlichen Flanken (8) jedes Profilkörpers (5) an ihrer Innenseite lichtundurchlässig verspiegelt sind.

**23.** Beleuchtungsanordnung nach einem der vorhergehenden Ansprüche,
**dadurch gekennzeichnet,**
**daß** die Profilkörper (5) das Licht der Lichtrnittel (7) über eine im wesentlichen ebene Emissionsfläche des Grundkörpers (5) abstrahlen.

**24.** Beleuchtungsanordnung nach Anspruch 23,
**dadurch gekennzeichnet,**
**daß** die Profilkörpers (5) derart ausgestaltet sind, daß sie das Licht der Lichtmittel (7) innerhalb eines bestimmten maximalen Abstrahlwinkelbereichs ($\gamma_{max}$) bezüglich der Flächennormalen der Emissionsfläche des Grundkörpers (4) abstrahlen.

**25.** Beleuchtungsanordnung nach Anspruch 24,
**dadurch gekennzeichnet,**
**daß** der maximale Abstrahlwinkel ($\gamma_{max}$) 60° bis 70° bezüglich der Flächennormalen der Emissionsfläche des Grundkörpers (4) beträgt.

**26.** Beleuchtungsanordnung nach Anspruch 24,
**dadurch gekennzeichnet,**
**daß** der maximale Abstrahlwinkel ($\gamma_{max}$) 90° bezüglich der Flächennormalen der Emissionsfläche des Grundkörpers (4) beträgt.

**27.** Beleuchtungsanordnung nach Anspruch 24
**dadurch gekennzeichnet,**
**daß** der maximale Abstrahlwinkel ($\gamma_{max}$) 30° bezüglich der Flächennormalen der Emissionsfläche des Grundkörpers (4) beträgt.

**28.** Beleuchtungsanordnung nach einem der vorhergehenden Ansprüche,
**dadurch gekennzeichnet,**
**daß** der Grundkörper (4) durch eine Kunststoff-Folie aus lichtdurchlässigem Material gebildet ist.

**29.** Verwendung einer Beleuchtungsanordnung (2) nach einem der vorhergehenden Ansprüche in einer Leuchte (1),

wobei die Leuchte ein Gehäuse (9) aufweist, welches die Beleuchtungsanordnung (2) hält,

wobei der Grundkörper (4) zugleich als Abdeckung der Leuchte (1) dient, und

wobei die auf den Profilkörpern (5) der Beleuchtungsanordnung (2) angebrachten Lichtmittel (7) als Lichtquelle der Leuchte (1) dienen.

**30.** Verwendung einer Beleuchtungsanordnung (2) nach einem der Ansprüche 1 bis 28 in einem Bildschirm, wobei die Beleuchtungsanordnung zur Beleuchtung des Bildschirms dient.

**31.** Verwendung nach Anspruch 30,
**dadurch gekennzeichnet,**
**daß** jeder Profilkörper (5) der Beleuchtungsanordnung (2) einem Bildpunkt des Bildschirms zugeordnet ist.

**32.** Verwendung einer Beleuchtungsanordnung (2) nach einem der Ansprüche 1 bis 28 in einer Signalleuchte,
wobei die auf den Profilkörpern (5) der Beleuchtungsanordnung (2) angebrachten Lichtmittel (7) als Lichtquelle der Signalleuchte (1) dienen, und
wobei die Profilkörper (5) der Beleuchtungsanordnung derart ausgestalter sind, daß sie das Licht innerhalb eines bestimmten maximalen Abstrahlwinkelbereichs ($\gamma_{max}$) von 30° bezüglich der Flächennormalen der Emissionsfläche des Grundkörpers (4) der Beleuchtungsanordnung (2) abstrahlen.

**Claims**

**1.** Illumination arrangement (2), having
at least one luminous means (7) for the emission of light,
a base body (4) of a light permeable material, and profiled bodies (5) of a light permeable material, formed in the base body (4), which are spaced apart from one another by means of recesses (6) and which direct the light emitted from the luminous means (7) to an emission surface of the base body (4) and there emit the light,
**characterized in that**,
the luminous means (7) are applied to the upper bounding surfaces of the profiled bodies (5) and emit the light into the corresponding profiled bodies (5) through the upper bounding surfaces of the profiled bodies (5).

**2.** Illumination arrangement according to claim 1,
**characterized in that**,
the luminous means (7) emit diffuse light into the profiled bodies (5).

**3.** Illumination arrangement according to claim 1 or 2,
**characterized in that**,
a luminous means (7) is applied to the upper bounding surface of each profiled body (5).

**4.** Illumination arrangement according to claim 3,
**characterized in that**,
the luminous means (7) are applied in the form of a luminescent layer on the upper bounding surfaces of the profiled bodies (5).

**5.** Illumination arrangement according to claim 4,
**characterized in that**,
each luminescent layer (7) has a thickness < 1 mm.

**6.** Illumination arrangement according to any preceding claim,
**characterized in that**,
the luminous means (7) are so configured that they emit light upon the application of an electrical voltage.

**7.** Illumination arrangement according to claim 6,
**characterized in that**,
the luminous means (7) have an organic or inorganic semiconductor material as light emitting material.

**8.** Illumination arrangement according to claim 7,
**characterized in that**,

the luminous means (7) have a polymer material as light emitting material.

9. Illumination arrangement according to claim 1 or 2,
   **characterized in that**,
   the luminous means (7) include at least one flat fluorescent lamp which is arranged on the upper bounding surface of the profiled bodies (5).

10. Illumination arrangement according to claim 9,
    **characterized in that**,
    on each profiled body (5) there is arranged a flat fluorescent lamp, as luminous means (7).

11. Illumination arrangement according to claim 9 or 10,
    **characterized in that**,
    the flat fluorescent lamp (7) has a body (11) having a light emission surface, which body includes an inner chamber (9) filled with certain gas molecules, in which by means of the application of an electrical voltage the gas molecules can be excited and upon their decomposition release UV radiation, and
    **in that** the flat fluorescent lamp (7) has a fluorescent layer (15) arranged neighbouring the light emission surface, which layer transforms the UV radiation released by decomposition of the gas molecules into visible light, so that the visible light is irradiated through the light emission surface into the corresponding profiled body or profiled bodies (5).

12. Illumination arrangement according to claim 9 or 11,
    **characterized in that**,
    the flat fluorescent lamp is applied as a common luminous means (7) on the upper bounding surface of a plurality of profiled bodies (5), and
    **in that** light limiting means (12) are provided in order to ensure the irradiation of the visible light from the fluorescent layer (15) is directed exclusively into the corresponding profiled bodies (5) .

13. Illumination arrangement according to claim 12,
    **characterized in that**,
    the light limiting means include a light impermeable layer (12), having light exit openings, arranged on the light emission surface of the flat fluorescent lamp (7), whereby the light exit openings are so arranged that each light exit opening coincides with a corresponding profiled body.

14. Illumination arrangement according to any of claims 11 to 13,
    **characterized in that**,
    the light emission surface of the flat fluorescent lamp (7) has the profiled bodies (5), the profiled bodies (5) being formed in one piece with the light emission surface.

15. Illumination arrangement according to any of claims 11 to 14,
    **characterized in that**,
    a UV-light reflecting layer (14) is arranged between the fluorescent layer (15) and the light emission surface of the flat fluorescent lamp (7).

16. Illumination arrangement according to any preceding claim,
    **characterized in that**,
    the profiled bodies (5) are formed to be elongate in the shape of strips and parallel to one another.

17. Illumination arrangement according to any of claims 1 to 15,
    **characterized in that**,
    the profiled bodies (5) are formed each in the shape of a truncated pyramid and are so arranged that they are spaced apart from one another by means of recesses (6) running in a grid-like manner.

18. Illumination arrangement according to any preceding claim,
    **characterized in that**,
    the recesses(6) between the profiled bodies (5) are in substance V-shaped.

19. Illumination arrangement according to any preceding claim, **characterized in that**,

the profiled bodies (5) have side flanks (8) which develop outwardly inclined from the respective luminous means (7) towards the base body (4).

20. Illumination arrangement according to claim 19,
**characterized in that**,
the side flanks (8) are straight or curved.

21. Illumination arrangement according to claim 19 or 20,
**characterized in that**,
each profiled body (5) is so configured that the light of the corresponding luminous means (7) irradiated into its interior is totally reflected within the profiled body (5) at the side flanks (8).

22. Illumination arrangement according to claim 21,
**characterized in that**,
the side flanks (8) of each profiled body (5) are light impermeably mirrored at their inner faces.

23. Illumination arrangement according to any preceding claim,
**characterized in that**,
the profiled bodies (5) irradiate the light of the luminous means (7) over an emission surface of the base body (5) which is substantially flat.

24. Illumination arrangement according to claim 23,
**characterized in that**,
the profiled bodies (5) are so configured that they emit the light of the luminous means (7) within a determined maximum angle of emission range ($\gamma_{max}$) with regard to the normal to the emission surface of the base body (4).

25. Illumination arrangement according to claim 24,
**characterized in that**,
the maximum emission angle ($\gamma_{max}$) is 60° to 70° with reference to the normal to the emission surface of the base body (4).

26. Illumination arrangement according to claim 24,
**characterized in that**,
the maximum emission angle ($\gamma_{max}$) is 90° with reference to the normal to the emission surface of the base body (4).

27. Illumination arrangement according to claim 24,
**characterized in that**,
the maximum emission angle ($\gamma_{max}$) is 30° with reference to the normal to the emission surface of the base body (4).

28. Illumination arrangement according to any preceding claim,
**characterized in that**,
the base body (4) is formed of a plastics foil of light permeable material.

29. Use of an illumination arrangement (2) in accordance with any preceding claim, in a light fitting (1),
the light fitting having a housing (9) which contains the illumination arrangement (2),
the base body (4) serves at the same time as screen of the light fitting (1), and
the luminous means (7) applied to the profiled bodies (5) of the illumination arrangement (2) serve as light source of the light fitting (1).

30. Use of an illumination arrangement according to any of claims 1 to 28 in a display screen,
the illumination arrangement serving for the illumination of the display screen.

31. Use in accordance with claim 30,
**characterized in that**,
each profiled body (5) of the illumination arrangement (2) is associated with an image point of the display screen.

32. Use of an illumination arrangement (2) in accordance with any of claims 1 to 28, in a signalling light fitting (1),
the luminous means (7) applied to the profiled bodies (5) of the illumination arrangement (2) serving as light source for the signalling light fitting (1), and the profiled bodies (5) of the illumination arrangement are so configured that they emit the light within a certain maximum emission angle range ($\gamma_{max}$) of 30° with reference to the normal to the emission surface of the base body (4) of the illumination arrangement (2).

## Revendications

1. Dispositif d'éclairage (2) comportant
   au moins un moyen de production de lumière (7) pour émettre de la lumière,
   un corps de base (4) formé d'un matériau transparent pour la lumière, et
   des corps profilés (5) formés dans le corps de base (4) et réalisés en un matériau transparent pour la lumière, et qui sont séparés les uns des autres par des renfoncements (6) et dirigent la lumière émise par les moyens de production de lumière (7) vers une surface d'émission du corps de base (4) et délivre en cet endroit la lumière, **caractérisé en ce que** les moyens de production de lumière (7) sont disposés sur les surfaces limites supérieures des corps profilés (5) et émettent la lumière à travers les surfaces limites supérieures des corps profilés (5), dans les corps profilés correspondants (5).

2. Dispositif d'éclairage selon la revendication 1, **caractérisé en ce que** les moyens de production de lumière (7) émettent une lumière diffuse dans les corps profilés (5).

3. Dispositif d'éclairage selon la revendication 1 ou 2, **caractérisé en ce qu'**un moyen de production de lumière (7) est disposé sur la surface limite supérieure de chaque corps profilé (5).

4. Dispositif d'éclairage selon la revendication 3, **caractérisé en ce que** les moyens de production de lumière (7) sont disposés sous la forme d'une couche luminescente sur les surfaces limites supérieures des corps profilés (5).

5. Dispositif d'éclairage selon la revendication 4, **caractérisé en ce que** chaque couche luminescente (7) possède une épaisseur < 1 mm.

6. Dispositif d'éclairage selon l'une des revendications précédentes, **caractérisé en ce que** les moyens de production de lumière (7) sont agencés de telle sorte qu'ils émettent de la lumière lors de l'application d'une tension électrique.

7. Dispositif d'éclairage selon la revendication 6, **caractérisé en ce que** les moyens de production de lumière (7) comportent un matériau semiconducteur organique ou minéral en tant que matériau d'émission de lumière.

8. Dispositif d'éclairage selon la revendication 7, **caractérisé en ce que** les moyens de production de lumière (7) comportent un matériau polymère en tant que matériau d'émission de lumière.

9. Dispositif d'éclairage selon la revendication 1 ou 2, **caractérisé en ce que** les moyens de production de lumière (7) comprennent au moins une lampe fluorescente plate, qui est disposée sur la surface limite supérieure des corps profilés (5).

10. Dispositif d'éclairage selon la revendication 9, **caractérisé en ce qu'**une lampe fluorescente plate est disposée en tant que moyen de production de lumière (7) sur chaque corps profilé (5).

11. Dispositif d'éclairage selon la revendication 9 ou 10, **caractérisé en ce que**
    la lampe fluorescente plate (7) comporte un corps (11) possédant une surface d'émission de lumière qui comprend un espace intérieur (9) rempli par des molécules de gaz déterminées et dans lequel les molécules de gaz peuvent être excitées par application d'une tension électrique et libèrent, lors de leur décomposition, un rayonnement ultraviolet, et
    la lampe fluorescente plate (7) possède une couche de substance luminescente (15) qui est disposée au voisinage de la surface d'émission de lumière et qui convertit le rayonnement ultraviolet libéré lors d'une décomposition des molécules de gaz en une lumière visible de sorte que la lumière visible est émise à travers la surface d'émission de lumière dans le ou les corps profilés correspondants (5) .

12. Dispositif d'éclairage selon la revendication 9 ou 11, **caractérisé en ce que**
    la lampe fluorescente plate en tant que moyen commun de production de lumière (7) est disposée sur la surface limite supérieure de plusieurs corps profilés (5), et

il est prévu des moyens de limitation de lumière (12), servant à garantir l'émission d'une lumière visible par la couche de substance luminescente (15) exclusivement dans les corps profilés correspondants (5).

**13.** Dispositif d'éclairage selon la revendication 12, **caractérisé en ce que** les moyens de limitation de la lumière comprennent une couche (12) transparente pour la lumière qui est disposée sur la surface d'émission de lumière de la lampe fluorescente plate (7) et comporte des ouvertures de sortie pour la lumière, les ouvertures de sortie pour la lumière étant disposées de telle sorte que chaque ouverture de sortie pour la lumière soit recouverte par un corps profilé correspondant.

**14.** Dispositif d'éclairage selon l'une des revendications 11 à 13, **caractérisé en ce que** la surface d'émission de lumière de la lampe fluorescente plate (7) comporte des corps profilés (5), les corps profilés (5) étant réalisés d'un seul tenant avec la surface d'émission de lumière.

**15.** Dispositif d'éclairage selon l'une des revendications 11 à 14, **caractérisé en ce qu'**une couche (14) réfléchissant le rayonnement ultraviolet est disposée entre la couche de substance luminescente (15) et la surface d'émission de lumière de la lampe fluorescente plate (7).

**16.** Dispositif d'éclairage selon l'une des revendications précédentes, **caractérisé en ce que** les corps profilés (5) sont réalisés en étant allongés sous la forme de bandes et sont parallèles entre eux.

**17.** Dispositif d'éclairage selon l'une des revendications 1 à 15, **caractérisé en ce que** les corps profilés (5) sont agencés sous la forme d'un tronc de pyramide et sont disposés de telle sorte qu'ils sont séparés les uns des autres par des renfoncements (6) qui s'étendent sous la forme d'un réseau.

**18.** Dispositif d'éclairage selon l'une des revendications précédentes, **caractérisé en ce que** les renfoncements (6) entre les corps profilés (5) sont essentiellement en forme de V.

**19.** Dispositif d'éclairage selon l'une des revendications précédentes, **caractérisé en ce que** les corps profilés (5) comportent les flancs latéraux (8) qui sont inclinés vers l'extérieur à partir des moyens respectifs de production de lumière (7) en direction du corps de base (4).

**20.** Dispositif d'éclairage selon la revendication 19, **caractérisé en ce que** les flancs latéraux (8) s'étendent de façon rectiligne ou courbe.

**21.** Dispositif d'éclairage selon la revendication 19 ou 20, **caractérisé en ce que** chaque corps profilé (5) est agencé de telle sorte que la lumière, émise en son intérieur, du moyen de production de lumière correspondant (7) est entièrement réfléchie à l'intérieur du corps profilé (5) au niveau des flancs latéraux (8).

**22.** Dispositif d'éclairage selon la revendication 21, **caractérisé en ce que** les flancs latéraux (8) de chaque corps profilé (5) sont métallisés sur leur face intérieure de manière à être opaques à la lumière.

**23.** Dispositif d'éclairage selon l'une des revendications précédentes, **caractérisé en ce que** les corps profilés (5) émettent la lumière des moyens de production de lumière (7) par l'intermédiaire d'une surface d'émission essentiellement plane du corps de base (4).

**24.** Dispositif d'éclairage selon la revendication 23, **caractérisé en ce que** les corps profilés (5) sont agencés de telle sorte qu'ils émettent la lumière des moyens de lumière (7) à l'intérieur d'une plage angulaire maximale déterminée d'émission ($\gamma_{max}$) par rapport à la normale à la surface d'émission du corps de base (4).

**25.** Dispositif d'éclairage selon la revendication 24, **caractérisé en ce que** l'angle maximum d'émission ($\gamma_{max}$) est compris entre 60 et 70° par rapport à la normale à la surface d'émission du corps de base (4).

**26.** Dispositif d'éclairage selon la revendication 24, **caractérisé en ce que** l'angle maximum d'émission ($\gamma_{max}$) par rapport à la normale à la surface d'émission du corps de base (4) est égal à 90°.

**27.** Dispositif d'éclairage selon la revendication 24, **caractérisé en ce que** l'angle maximum d'émission ($\gamma_{max}$) par rapport à la normale à la surface d'émission du corps de base (4) est égal à 30°.

**28.** Dispositif d'éclairage selon l'une des revendications précédentes, **caractérisé en ce que** le corps de base (4) est formé par une feuille de matière plastique réalisée en un matériau transparent pour la lumière.

**29.** Utilisation d'un dispositif d'éclairage (2) selon l'une des revendications précédentes dans une lampe (1),
la lampe comportant un boîtier (9) qui retient le dispositif d'éclairage (2),
le corps de base (4) servant simultanément de capot pour la lampe (1), et
les moyens de production de lumière (7), qui sont disposés sur les corps profilés (5) du dispositif d'éclairage (2), étant utilisés comme source de lumière de la lampe (1).

**30.** Utilisation d'un dispositif d'éclairage (2) selon l'une des revendications 1 à 28 dans un écran, le dispositif d'éclairage servant à éclairer l'écran.

**31.** Utilisation selon la revendication 30,
**caractérisée en ce que** chaque corps profilé (5) du dispositif d'éclairage (2) est associé à un point d'image de l'écran.

**32.** Utilisation d'un dispositif d'éclairage (2) selon l'une des revendications 1 à 28 dans une lampe de signalisation, les moyens de production de lumière (7) disposés sur les corps profilés (5) du dispositif d'éclairage (2) étant utilisés comme source de lumière pour la lampe de signalisation (1), et
les corps profilés (5) du dispositif d'éclairage étant agencés de telle sorte qu'ils émettent la lumière à l'intérieur d'une zone angulaire maximale déterminée d'émission ($\gamma_{max}$) de 30° par rapport à la normale à la surface d'émission du corps de base (4) du dispositif d'éclairage (2).

Fig. 1

Fig. 2a

Fig. 2b

Fig. 3

Fig. 4a

Fig. 4b

Fig. 5a

Fig. 5b